# EUROPEAN PATENT SPECIFICATION

(11) **EP 0 839 084 B1**
(45) Date of publication and mention of the grant of the patent: **27.03.2002**
(21) Application number: 96924975.4
(22) Date of filing: 17.07.1996
(51) Int. Cl.: B29C 44/04, B29C 44/08

(54) **MOULDED FOAM ARTICLE WITH THICK AND THIN WALL PORTIONS**
SCHAUMFORMKÖRPER MIT DÜNNEN UND DICKEN TEILWANDSTÜCKEN
ARTICLE EN MOUSSE MOULE A SECTIONS DE PAROI EPAISSES ET MINCES

(30) Priority: 18.07.1995 GB 9514674; 08.05.1996 US 17386
(43) Date of publication of application: 06.05.1998
(73) Proprietor: Coraltech Limited, Petersfield, Hampshire GU32 1QN (GB)
(72) Inventor: CLARKE, Peter Reginald, Petworth, West Sussex GU28 0NU (GB)
(74) Representative: Messulam, Alec Moses
(86) International application number: GB9601706
(87) International publication number: WO9703800

(56) References cited:
- EP-A- 0 659 647
- GB-A- 1 589 102
- US-A- 3 291 875
- US-A- 3 505 435
- US-A- 3 703 255
- US-A- 3 793 415
- US-A- 4 189 456

## Description

The present invention relates to a method of forming an article via injection of plastics material into a mould.

A recognised problem, in injection moulding from plastics materials of articles having thin walls in particular, is that at marked differences in cross-section, differential shrinkage causes blemishes in the finished surface of the article.

Despite this problem, many new designs of injection moulded article could be feasible if marked changes in cross-section were possible, without shrinkage blemishes.

GB-A- 1,589,102 describes a method for injection-moulding plastics articles from a plastics material to which a blowing agent has been added, wherein the plastics material is injection-moulded into a mould having cavities, those cavities of which that are situated near a runner to the said mould offering such small passage to the plastics material as required to prevent the processing conditions under which the blowing agent can act upon the plastics material being attained, whereas after the plastics material has passed to a transition section in the mould, after which the cavities are wider, the processing conditions prevailing in the plastics material spontaneously modify so that the blowing agent acts upon the plastics material, causing the plastics material to foam so as to entirely fill the mould cavity.

The object of the present invention is to provide an improved method based on injection moulding and facilitating the production of substantial changes in cross-section.

According to one aspect of our invention there is provided a method of forming an article via injection of plastics material into a mould, the finish formed article having thin wall portion(s) and thick wall portion(s), the thick wall portion(s) being at least partially foamed, the method consisting in the steps of:
providing a mould tool defining in its closed state, between its cavity part and its core part, narrow gap portion(s) whose mould part gap is to be substantially reproduced in the thin wall portion(s) of the article and wide gap portion(s) whose mould part gap is less than the thickness of the wide gap portion(s) of the finish formed article;
closing the mould tool to define the narrow and wide gap portions;
injecting a plastics material mixture comprising a basic polymer and a foam producing additive into the mould tool;
allowing the plastics material mixture to at least substantially solidify in the narrow gap portions of the mould tool to produce the thin wall portions of the finish formed article;
withdrawing at least a portion of one part of the mould tool from the other part before the plastics material mixture has at least substantially solidified in the wide gap portion(s) of the mould tool to allow the mixture to expand by foaming and form at least some of the thick wall portion(s) of the finish formed article; and
ejecting the article from the mould tool.

In one alternative of our invention, the article has thick wall portion(s) at which foaming expansion is constrained on the withdrawal step until the ejection step and allowed to occur after ejection of the article from the mould.

In another alternative, the withdrawal step consists of withdrawing one or more portions of the one part of the mould tool from its closed position to widen locally the mould part gap for foaming expansion of the plastics material mixture to form the thick wall portion(s) of the article in the locally widened gap; and of opening the mould tool after the thick wall portion(s) of the article have substantially solidified to shape. Alternatively, an entire mould part can be partially withdrawn to allow foaming expansion and subsequently the mould tool is fully opened for ejection of the solidified article.

The foaming expansion can occur against and between the withdrawn portion(s) or part of the mould tool to fully fill the locally widened mould part gap; or the foaming expansion can occur to an extent to not fully fill the locally widened mould part gap.

In accordance with one preferred feature of our invention the withdrawal step consists of opening the mould tool before the thick wall portion(s) of the article have solidified to shape, foaming expansion thereof then occurring in the ambient atmosphere to form the thick wall portion(s). The moulding can be left on/in either of the core or the cavity of the mould tool, according to whether the foaming is intended to expand the article outwards or inwards in the wide gap portions.

Mechanical or pneumatic ejection means can be used.

In another alternative, the withdrawal and ejection steps occur at the same time.

One possible advantageous feature is that the step of allowing the plastics material mixture to solidify in the narrow gap portion(s) of the mould tool includes the step of cooling these portions of the mould tool to a greater extent than the wide gap portion(s) thereof

Another such feature is that the step of allowing the plastics material mixture to solidify in the narrow gap portion(s) of the mould tool includes the step of cooling these portions of the mould tool and heating the thick wall portion(s) thereof.

Preferably the step of withdrawing the one part of the mould tool, or its withdrawable portion, is delayed until the surface of the plastics material mixture has substantially solidified in the wide gap portion(s).

According to another aspect of the invention there is provided an article formed of plastics material, the finish formed article having thin wall portion(s) and thick wall portion(s), the thick wall portion(s) being at least partially expanded by foaming, the article having been moulded in accordance with the method of our invention.

According to a third aspect of the invention there is provided a mould tool as defined in the independent claims 22 and 23 for carrying out the method of our invention, the mould tool having a cavity part and a core part and the mould tool defining in its closed state, between its cavity part and its core part, narrow gap portion(s) whose mould part gap is to be substantially reproduced in the thin wall portion(s) of the article and wide gap portion(s) whose mould part gap is less than the thickness of the thick wall portion(s) of the finish formed article, the mould tool being so constructed that plastics material mixture injected into the narrow gap portions can solidify before such material in the wide gap portions, which can expand by foaming on withdrawal of at least a portion of one part of the mould tool from the other part.

In a first alternative, the mould tool has one or more portions movably mounted on the said one part of the mould tool for widening locally the mould part gap for forming the thick wall portion(s) of the article.

In a second alternative, the mould tool is adapted to be partially withdrawn prior to opening of it for widening locally the mould part gap for forming the thick wall portion(s) of the article.

Conveniently the core includes an air injection port for injecting air between it and the article, whereby the article is left in the cavity part of the mould tool for inwards foaming expansion of the thick wall portions. Alternatively the core can include means for mechanically removing the core from the article, whereby the article is left in the cavity part of the mould tool for inwards foaming expansion of the thick wall portions. Again, the cavity can be provided with either such means.

The mould tool can include means for cooling the narrow gap portion(s) of the mould tool to a greater extent than the wide gap portion(s) thereof, or means for heating the wide gap portion(s) thereof; or insulating insert(s) at the portion(s) thereof corresponding to thick wall portion(s) of the article.

Preferably the mould part gap varies between the wide and narrow gap portions of the mould. However it is possible for the mould part gap to be constant between the portions of the mould corresponding to the thick and thin wall portions of the article.

Where a constant mould part gap tool is used, the method of the first aspect of the invention is varied to consist in the steps of:
providing a mould tool defining in its closed state, between its cavity part and its core part, first gap portion(s) whose mould part gap is to be substantially reproduced in the thin wall portion(s) of the article and second gap portion(s) whose mould part gap is less than the thickness of the thick wall portion(s) of the finish formed article, the mould part gap of the first and second gap portions being constant from one to the other;
closing the mould tool to define the first and second gap portions;
injecting a plastics material mixture comprising a basic polymer and a foam producing additive into the mould tool;
differentially cooling the first and second gap portions, the first gap portion(s) being cooled to a greater extent than the second gap portion(s).
allowing the plastics material mixture to at least substantially solidify in the first gap portions of the mould tool to produce the thin wall portions of the finish formed article;
withdrawing at least a portion of one part of the mould tool from the other part before the plastics material mixture has at least substantially solidified in the second gap portion(s) of the mould tool to allow the mixture to expand by foaming and form at least some of the thick wall portion(s) of the finish formed article; and
ejecting the article from the mould tool.

Preferably the material comprises a mixture of a basic polymer, such as polypropylene, and a foam producing additive, such as the foaming agent sold under the SAFOAM trade mark by Reedy International Corporation of Keyport, New Jersey, USA. This is a carbon dioxide foam material.

A number of alternatives, which may be discrete or combined, are envisaged for providing that the plastics mixture does not solidify before withdrawal of the mould portion and indeed for the withdrawal.

For non-solidification before withdrawal, it is possible, particularly where the mould tool cavity is widened at the desired foaming position, to open the mould in an otherwise conventional manner at a time after the thin wall portions have solidified, but before the thick wall portions have solidified due to their greater thermal mass of their plastics mixture.

To provide more certainty of the thick plastics mixture still being not solid, the mould tool may be provided locally to its wide gap portion with less cooling than else where in the tool, by arranging cooling ducts to be distanced from the wide gap portion.

Alternatively or additionally, the mould tool, in its part on the side of the moulding where the foaming expansion is to occur, may be provided with an insert which is of less conductive material, for instance of titanium or ceramic material, whereby the plastics material at the thick wall portion is effectively insulated from cooling. It is envisaged that this arrangement could enable the wall thickness in terms of the gap between the cavity parts to be uniform between the thick and thin wall portions, with thickening occurring only on foaming expansion.

The withdrawal of the portion of the mould part at the wide gap portion to allow foaming expansion may be effected by unitary opening of the mould. Alternatively, a portion of the mould may be able to be withdrawn before opening of the mould, by being relatively movable within the mould part. In either case, the withdrawal may be complete, that is far enough to be clear of the expansion of the plastics mixture at the wide gap portion. As an alternative to this, the withdrawal may be partial only in relation to the movement of the mould parts for complete opening of the mould. In this case the wide gap, mould-part portion may be withdrawn only so far as to provide a surface against which the plastics material expands for determining its final shape, the withdrawal being completed when the material has foamed and solidified.

To help understanding of the invention, a specific embodiment thereof together with several variations will now be described by way of example and with reference to the accompanying drawings in which:
Figure 1 is a cross-sectional side view of an injection moulded cup able to be moulded with a mould using a technique, which appears to be known;
Figure 2 is a similar view of a cup formed in accordance with the present invention;
Figure 3 is a similar view of a mould tool for preliminary moulding of the cup;
Figure 4 is a side similar view of the mould tool open for foaming of thick wall sections of the cup on the core of the mould tool;
Figure 5 is a similar, partially sectioned view showing foaming of the thick wall sections whilst the cup is retained in cavity of the mould;
Figure 6 is another similar view show foaming of the thick wall sections after ejection of the cup from both the cavity and the core;
Figure 7 is a view showing two variants of the mould tool of Figure 3;
Figure 8 is another such view showing two further variants of the mould tool; and
Figure 9 is a further view of the mould tool, varied to show mechanical ejection means.

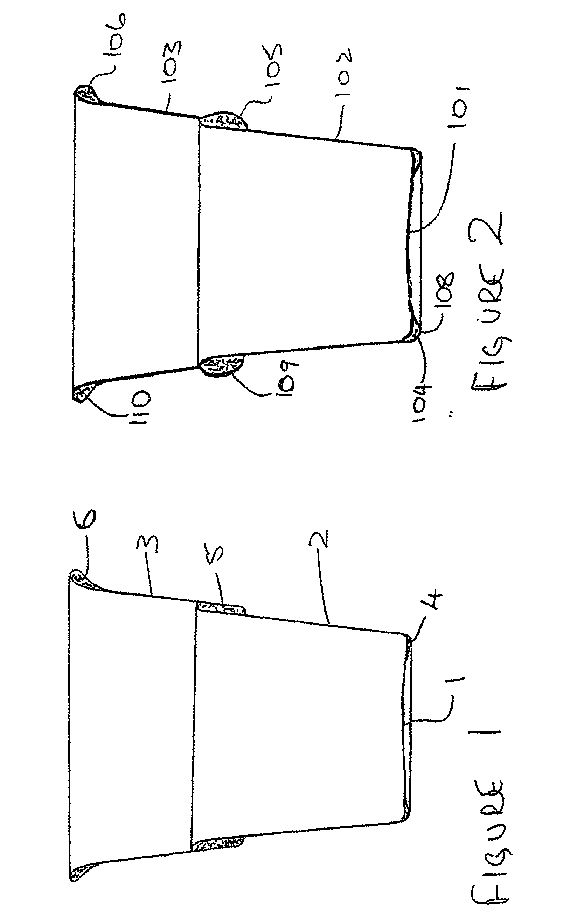

Referring first to Figure 1, the cup has a base 1, a lower side wall 2 and an upper side wall 3, these being thin wall portions. At the corner 4 between the base and the lower side wall, at a band 5 between the upper and lower side walls and at the rim 6 there are thick wall portions. Typically the thin wall portions are 0.7mm thick and the thick wall portions are 1.2mm thick.

This cup could be moulded with conventional plastics materials, but due to the different wall sections, shrinkage marks could be expected to appear in the thick wall portions. In other words, conventional moulding techniques result in uneven wall thickness in the thick wall portions.

We have discovered that we can mould the cup with even wall thickness in the thick wall portions, by including a small amount of foaming agent in the plastics material. Despite having originally believe this to be a new technique, it appears to us that this may be known.

In this basic technique, we used plastics material comprising free flowing polypropylene with a small addition of foaming agent, typically less than 5% and in the region of 1%, in accordance with the directions of the suppliers of the SAFOAM agent, Reedy International Corporation of Keyport, NJ, USA. In the thick wall portions, the agent causes foaming, whilst in the thin wall portions no foaming occurs. The degree of foaming can be controlled by adjustment of injection parameters such as pressure, time, temperature, quantity of plastics material and percentage of foaming agent in the material, such adjustments being routinely made in the set up of an injection moulding machine.

We believe that a combination of the higher pressure required to force the material into the narrow gap portions and the increased cooling rate in the narrow gap portions inhibit the formation of foaming in the thin wall portions, whereas the lower pressure present in the wide gap portions and the greater bulk of plastics material in the wide gap portions requiring longer to cool allow foaming in these portions. Originally we believed that the foaming to fill the wide gap portions of the mould tool cavity needed to occur before opening of the mould. However we have now been surprised to discover that additional foaming can occur due to opening of the mould before cooling of the thick wall portions to solidification.

Our invention is an adaption of the use of plastics material including foaming agent to allow foaming to continue after at least partial opening of the mould in which the cup or other article is moulded.

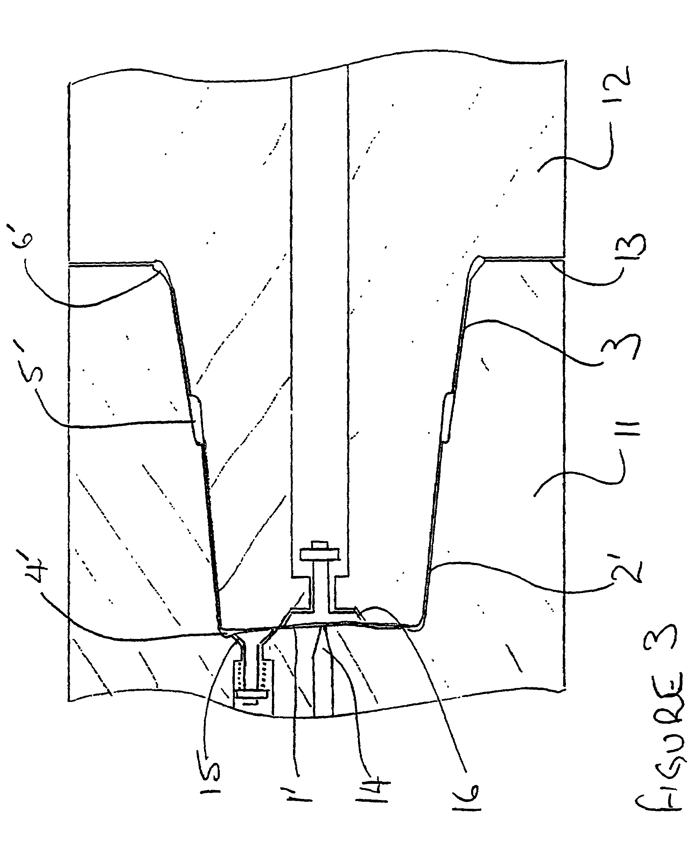

Figure 2 shows a cup formed in accordance with the invention. It has thin wall portions, namely a base 101, a lower side wall 102 and an upper side wall 103, in which no foaming occurs. These portions have their wall thickness determined by the mould part gap. The cup also has thick wall portions, namely the corner 104, the band 105 and the rim 106, in which foaming occurs after mould opening so that the wall thickness is increased beyond that provided by the mould. Compared with the 1.2mm wall thickness in the band 5, using the same mould, a maximum band wall thickness of 3.2mm is achievable. It will be noted the outer contour of the band is curved, due to restraint of its upper and lower margins 106,107 where the wall thickness alters to being thin. On the outer surface 108 between these margins, the band bows out. The outer surface of the rim 106 also bows out. In both these instances, and indeed at the corner 104, the outer surface is substantially solidified on opening of the mould, but able to stretch as foaming occurs in the still molten plastics material at the centre of the thick wall portions, to give the shapes shown in Figure 2. In cup of Figure 1, such foaming as occurs, does so against the constraint of the still closed mould. In the cup of Figure 2, the constraint on the foaming is atmospheric pressure and the skin tension of the outer surface. The shape of the rim outer surface 109 is of particular note, in that the shape in which it originally solidifies is concave. However on foaming, the concave surface has little pressure constrain on it and is blown out over-centre to the convex shape 109. This results in a maximum wall thickness of 2.7mm despite the vertical extent of the rim being less than that of the band.

It should be noted that the 3:1 wide:narrow mould gap ratio, that is the ratio of thin wall thickness to thick wall thickness prior to foaming after mould opening, is exemplary only and the possible limits on the ratio have not yet been researched. However, we have developed a technique, described in more detail below, for allowing post-opening foaming where no initial wall thickness change is present.

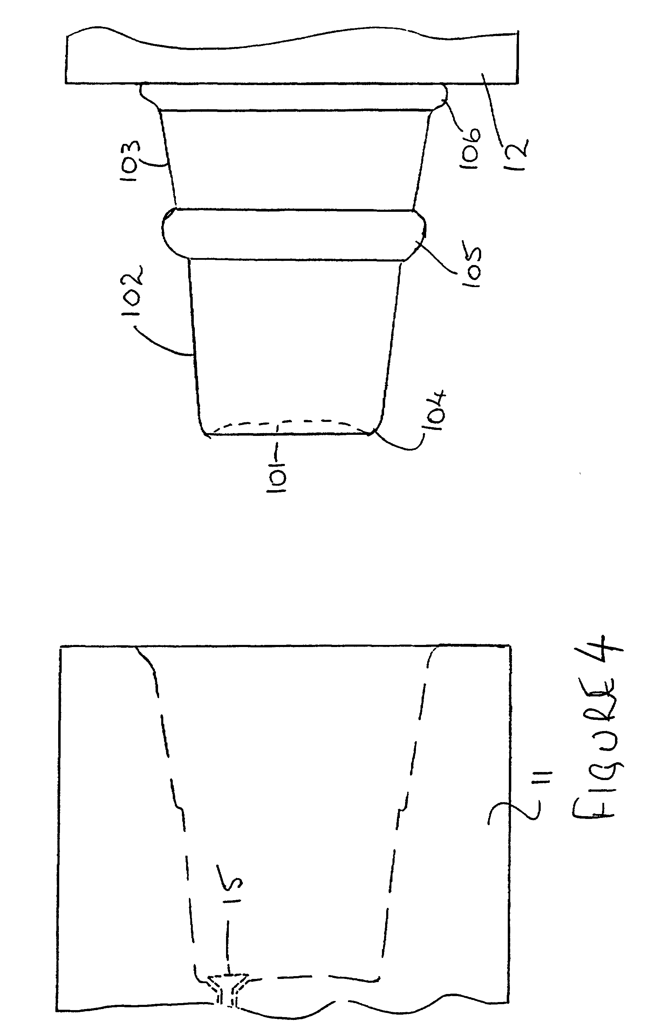

Turning now to Figure 3, the mould tool there shown has a cavity 11 and a core 12, the two being separable at a joint line 13. The cavity has an injection point 14 and a spring closed air injection port 15 in the form of a poppet valve. The core has an air injection port 16 opposite the injection port, with a free floating valve member closed by pressure in the moulding void.

On injection of the plastics material mixture, the port 16 closes and the moulding void fills. The injection parameters are adjusted such that the material reaches the cup rim 6, without completely filling the void. The foaming agent causes foaming in the thick wall portions. However this does not occur in the thin wall portions, where the pressure required to displace the material is higher and the cooling is quicker. When time has been allowed for the plastics material to at least substantially solidify in the narrow gap portions of the mould 1',2',3', corresponding to the base 1, lower wall 2 and upper wall 3 of the cup and for some foaming in the wide gap portions 4',5',6' of the mould, corresponding to the corner 4, band 5 and rim 6, and before the material has solidified in the thick wall portions, the mould is opened and air pressure applied to the port 15. This separates the moulding from the cavity, and together with shrinkage onto the core, allows withdrawal of the core with the moulding.

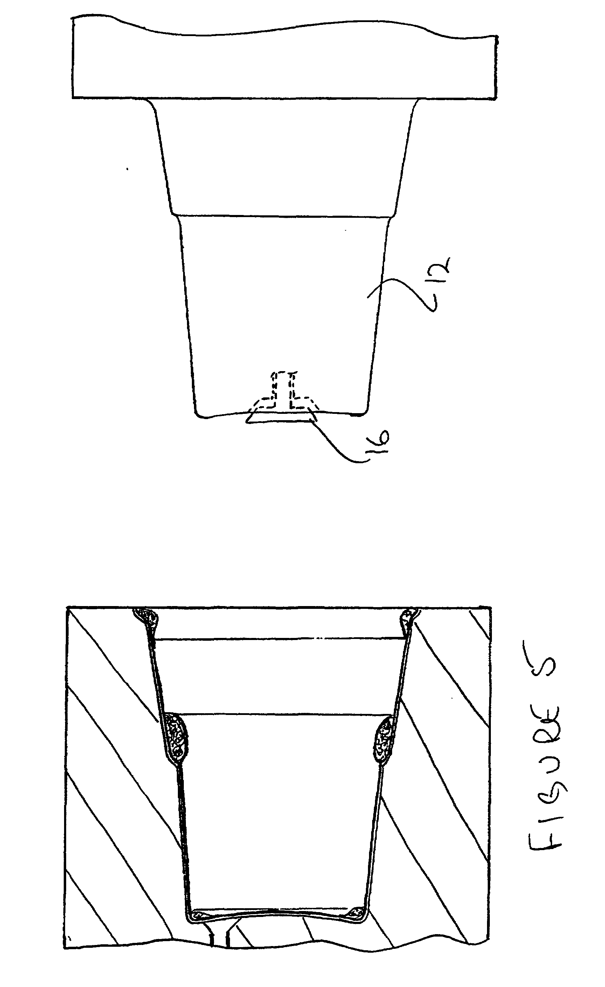

The outer surface skins 108,109,110 of the material (see Figure 2) at the wide gap portions 104,105,106 has at least substantially solidified, but does not constrain the foaming agent from generating sufficient pressure to create the shapes described above with reference to Figure 2 and as also shown in Figure 4. After a further delay to allow the moulding to cool, air is introduced via the port 16. This expands the moulding which is released from and then drops off the core.

It is believed that the foaming forces the moulding into good thermal contact with the mould at the wide gap portions before opening of the mould. This enhances cooling of the plastics material to form the skins of the thick wall portions. Further use of a carbon dioxide foaming agent which absorbs appreciable energy in foaming, that is cools the material on foaming, is advantageous in quickening cooling. However, foaming agents using other gases and base polymers other than polypropylene are possible to use in the invention.

Cycle times, injection pressure and material usage, which are comparable to those for conventional thin wall moulding, have been experienced. However, detailed comparisons have not been made at this time.

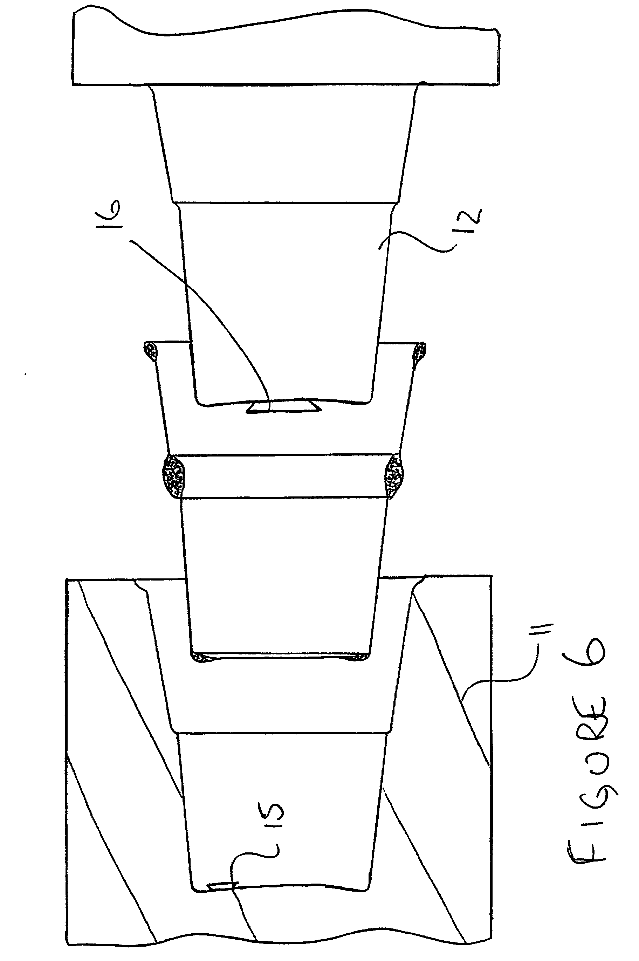

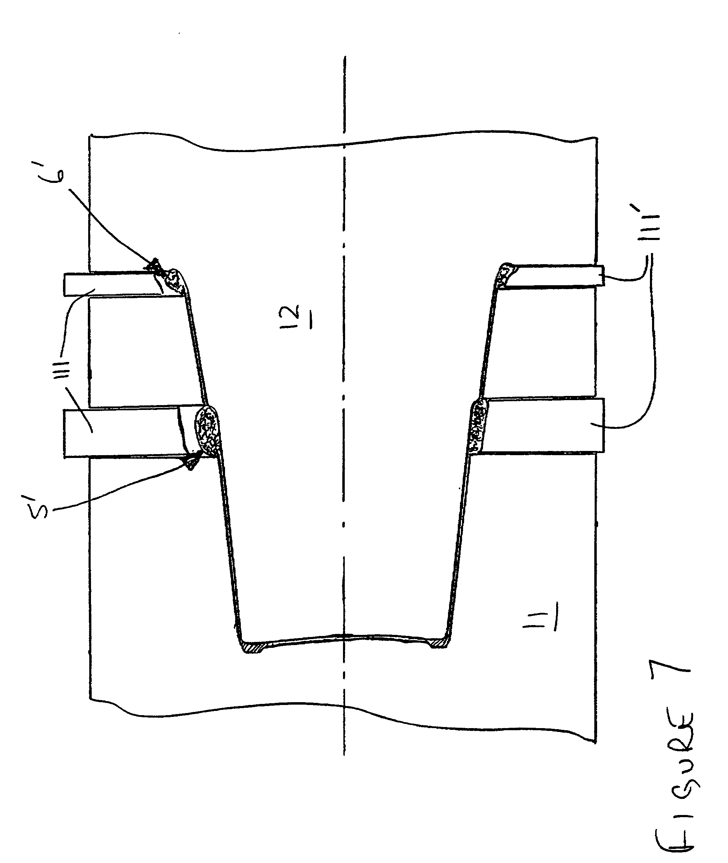

Figure 5 shows an alternative mould opening sequence, in which air is introduced first via the port 16, with the result that the moulding is blown off the core and left in the cavity. This results in the thick wall portion expanding inwards on foaming, as shown. Then air is introduced via the port 15 blowing the cup out of the cavity. As another alternative shown with reference to Figure 6, air can be introduced via both of ports 15 and 16, with the result that the cup leaves both the core and the cavity simultaneously and the foaming causes both inwards and outwards expansion of the thick wall portions.

Choice between these alternatives will be determined by the uses and characteristics required of the articles being produced. For instance for a clearly defined de-nesting step, foaming on the core may be advantageous. On the other hand for contouring of the outer surface of the band, either to enhance grippability or to enable display of symbols, foaming in the cavity may be advantageous.

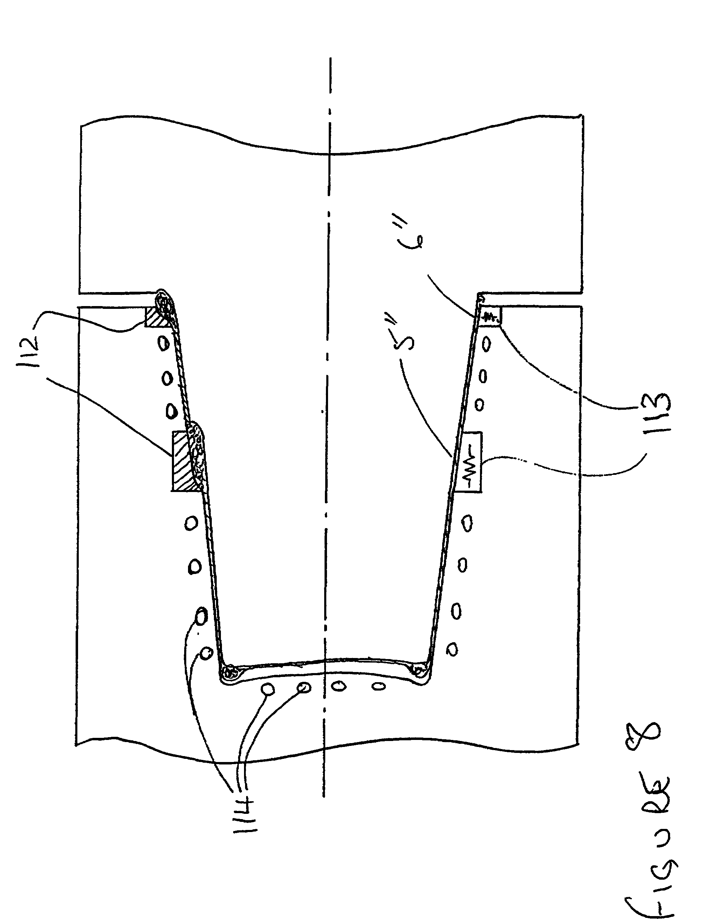

An important variant of the invention is shown in Figure 7. The cavity 11 of the mould tool has radially movable parts 111, at at least some of the wide gap portions 5',6'. After injection of the plastics material, the mould parts 111 are moved radially to locally widen the mould part gap. This may be to an extent as shown in the upper part of Figure 7 to allow free foaming expansion.

Alternatively, as shown in the lower part of the Figure, the radial movement may be to a limited extent only, so that foaming expansion occurs against these movable mould parts 111' for better definition of finished shape of the cup. As shown at the base 1 and comer 4, the mould can have differential wall thickness where post mould opening foaming is not permitted. This can allow for instance more structural rigidity in the comer, whilst the increased wall thickness at the band and rim allows enhanced thermal insulation. (It should however be noted that structural rigidity may be provided by increased wall thickness, particularly, where moulding conditions are controlled to provide a thick surface skin.) Thus a combination of different properties can be incorporated into the cup, or other article being moulded at different positions asrequired. Once the desired shape has been set into the article, the mould is then fully opened and the article ejected.

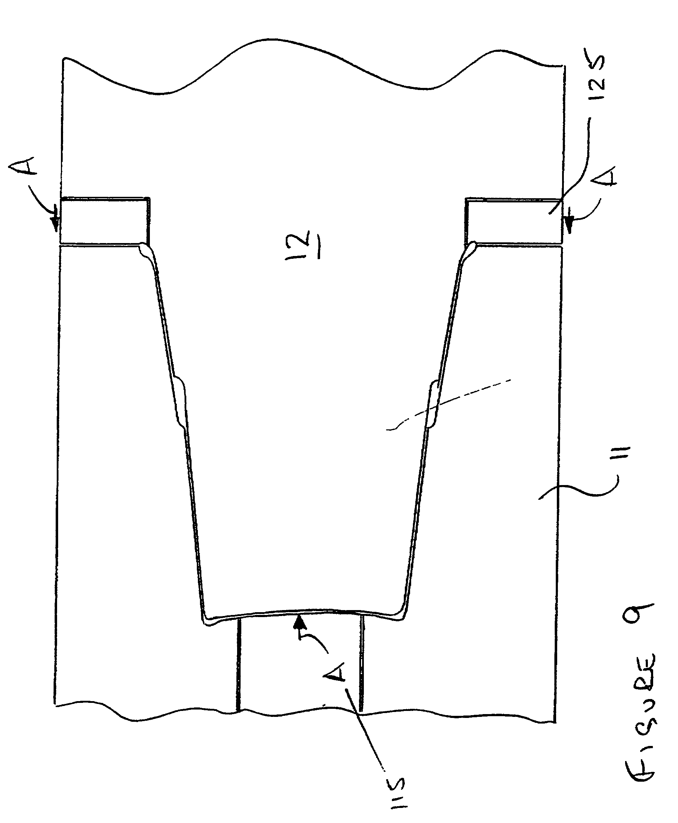

Another variant is shown in Figure 8, where the mould parts are bodily, but partially withdrawn. This has the effect of allowing foaming expansion in the direction of the partial withdrawal, at wide gap portions opened in this direction. Figure 8 shows the corner 4 expanding. The arrangement in the upper part of the Figure allows the rim and band to expand height-wise of the cup and subsequently radially on opening of the mould (not shown). For this, the upper part of the Figure shows ceramic or titanium insulating inserts 112 in the cavity at both the rim and the band. These retard the cooling of the plastics material in these portions, allowing it to maintain its temperature and remain molten at the centre of the ring and rim portions for foaming on full opening of the mould tool.

In the lower part of the Figure, at the ring and rim, the mould part gap is kept constant throughout the cup's side wall upto the rim; and ohmicly heated blocks 113 are provided in the cavity mould part at the ring and rim portions of the wall. These maintain the temperature to a greater extent than the ceramic inserts, and allow greater locally foaming on opening, that is to say they allow selective foaming at the constant wall thickness adjacent other thin wall portions which solidify before mould opening. It will be appreciated that by a combination of these alternatives, the degree of foaming attainable in different regions of the article being produced can be achieved and controlled at will.

It should be noted that by use of an ohmic block such as 113, foaming can be induced selectively in a region where the mould part gap is uniform before opening.

Figure 8 also shows cooling ducts 114 in the cavity part of the mould for cooling the narrow gap portion thereof 1',2',3'. By concentration of the cooling ducts at these portions, the thin wall portions of the article and the surface skins only of the thick wall portions can be solidified prior to mould opening.

Figure 9 shows alternatives to the use of air introduction to remove the moulded article from the core or cavity. For removal of the article from the core after foaming, the latter is provided with a stripper ring 125. For ejection of the article from the cavity, an ejector member 115 of cavity is provided. Arrows A show the direction of movement of these elements relative respectively to the core and cavity for ejection.

It should be noted that the invention is not intended to be restricted to foamed portions being at any particular region of the article with respect to the injection point. The above described embodiment has three thick wall portions as finished, firstly adjacent the injection point, secondly remote from the injection point and thirdly intermediate the other two portions. Other arrangements are possible. Also it should be noted that although the formation of the articles involves foaming of the plastics material mixture, the internal structure of the article may vary. Usually there will be a non-uniform bubble size across a section from one skin to another. At the skins, there will be little foaming if any and progressively towards the centre, the bubble density will increase, with corresponding decrease in physical density. In certain articles, the bubbles will merge, particularly at the centre. Here, the bubbles may burst and merge to such extent as to create a discrete void extending through the article.

Further, it should be noted that more complex surface shapes are envisaged. For instance, for lettering or other surface contours in the thick wall portion(s), the cavity may have raised lettering for production of recessed contours in these portions. Further, other contours such as screw threads and snap-cap undercuts are envisaged to be mouldable by post-opening foaming in accordance with the invention. It is also envisaged that the foaming may be controlled to such extent as to facilitate the production of foamed regions of less rigidity and increased resilience with respect to unfoamed or restrainedly foamed regions.

## Claims

1. A method of forming an article via injection of plastics material into a mould, the finish formed article having thin wall portion(s) (101, 102, 103) and thick wall portion(s), (104, 105, 106) the thick wall portion(s) being at least partially foamed, the method consisting in the steps of:
• providing a mould tool defining in its closed state, between its cavity part (11) and its core part, narrow gap portion(s) (1', 2', 3') whose mould part gap is to be substantially reproduced in the thin wall portion(s) (4',5',6') of the article and wide gap portion(s) whose mould part gap is less than the thickness of the thick wall portion(s) of the finish formed article;
• closing the mould tool to define the narrow and wide gap portions;
• injecting a plastics material mixture comprising a basic polymer and a foam producing additive into the mould tool;
• allowing the plastics material mixture to at least substantially solidify in the narrow gap portions of the mould tool to produce the thin wall portions of the finish formed article;
• withdrawing at least a portion of one part of the mould tool from the other part before the plastics material mixture has at least substantially solidified in the wide gap portion(s) of the mould tool to allow the mixture to expand by foaming and form at least some of the thick wall portion(s) of the finish formed article; and
• ejecting the article from the mould tool.

2. A method of forming an article as claimed in claim 1, wherein the article has thick wall portion(s) at which foaming expansion is constrained on the withdrawal step until the ejection step and allowed to occur after ejection of the article from the mould.

3. A method of forming an article as claimed in claim 1 or claim 2, wherein the withdrawal step consists of withdrawing one or more portions (111,111') of the one part of the mould tool from its closed position to widen locally the mould part gap for foaming expansion of the plastics material mixture to form the thick wall portion(s) of the article in the locally widened gap; and of opening the mould tool after the thick wall portion(s) of the article have substantially solidified to shape.

4. A method of forming an article as claimed in claim 3, wherein the foaming expansion occurs against and between the withdrawn portion(s) of the one mould part and the other mould part to fully fill the locally widened mould part gap.

5. A method of forming an article as claimed in claim 3, wherein the foaming expansion occurs to an extent to not fully fill the locally widened mould part gap.

6. A method of forming an article as claimed in claim 1 or claim 2, wherein the withdrawal step consists of bodily and partially withdrawing the one part of the mould tool to widen locally the mould part gap for foaming expansion of the plastics material mixture to form the thick wall portion(s) of the article against and between the mould parts in the locally widened gap; and of fully opening the mould tool after the thick wall portion(s) of the article have substantially solidified to shape.

7. A method of forming an article as claimed in claim 6, wherein the foaming expansion occurs against and between the mould parts to fully fill the locally widened mould part gap.

8. A method of forming an article as claimed in claim 6, wherein the foaming expansion occurs to an extent to not fully fill the locally widened mould part gap.

9. A method of forming an article as claimed in any preceding claim, wherein the withdrawal step consists of opening the mould tool before the thick wall portion(s) of the article have solidified to shape, foaming expansion thereof then occurring in the ambient atmosphere to form the thick wall portion(s).

10. A method of forming an article as claimed in claim 9, wherein withdrawal step includes withdrawal of the core from the article, whereby the article is left in the cavity part of the mould tool and the foaming expansion causes the thick wall portion(s) to increase in thickness inwardly, with the outside shape of the article being controlled locally by the cavity part of the mould.

11. A method of forming an article as claimed in claim 10, wherein withdrawal step includes injection of air between the core part of the mould tool and the article.

12. A method of forming an article as claimed in claim 10, wherein withdrawal step includes mechanical withdrawal of the core part of the mould tool from the article.

13. A method of forming an article as claimed in claim 9, wherein withdrawal step includes injection of air between the cavity part of the mould tool and the article, whereby the article is left on the core part of the mould tool and the foaming expansion causes the thick wall portion(s) to increase in thickness outwardly, with the inside shape of the article being controlled locally by the core part of the mould.

14. A method of forming an article as claimed in claim 13, wherein withdrawal step includes injection of air between the cavity part of the mould tool and the article.

15. A method of forming an article as claimed in claim 13, wherein withdrawal step includes mechanical withdrawal of the core part of the mould tool from the article.

16. A method of forming an article as claimed in claim 9, wherein the withdrawal and ejection steps occur at the same time.

17. A method of forming an article as claimed in any preceding claim, wherein the step of allowing the plastics material mixture to solidify in the narrow gap portion(s) of the mould tool includes the step of cooling these portions of the mould tool to a greater extent than the wide gap portion(s) thereof.

18. A method of forming an article as claimed in any one of claims 1 to 16, wherein the step of allowing the plastics material mixture to solidify in the narrow gap portion(s) of the mould tool includes the step of cooling these portions of the mould tool and heating the wide gap portion(s) thereof.

19. A method of forming an article as claimed in any preceding claim, wherein the step of withdrawing the one part of the mould tool, or its withdrawable portion, is delayed until the surface of the plastics material mixture has substantially solidified in the wide gap portion(s).

20. A method of forming an article via injection of plastics material into a mould, the finish formed article having thin wall portion(s) and thick wall portion(s), the thick wall portion(s) being at least partially foamed, the method consisting in the steps of:
• providing a mould tool defining in its closed state, between its cavity part and its core part, first gap portion(s) whose mould part gap is to be substantially reproduced in the thin wall portion(s) of the article and second gap portion(s) (5", 6") whose mould part gap is less than the thickness of the thick wall portion(s) of the finish formed article, the mould part gap of the first and second gap portions being constant from one to the other;
• closing the mould tool to define the first and second gap portions;
• injecting a plastics material mixture comprising a basic polymer and a foam producing additive into the mould tool;
• differentially cooling the first and second gap portions, the first gap portion(s) being cooled to a greater extent than the second gap portion(s).
• allowing the plastics material mixture to at least substantially solidify in the first gap portions of the mould tool to produce the thin wall portions of the finish formed article;
• withdrawing at least a portion of one part of the mould tool from the other part before the plastics material mixture has at least substantially solidified in the second gap portion(s) of the mould tool to allow the mixture to expand by foaming and form at least some of the thick wall portion(s) of the finish formed article; and
• ejecting the article from the mould tool.

21. An article formed of plastics material, the finish formed article having thin wall portion(s) and thick wall portion(s), the thick wall portion(s) being at least partially expanded by foaming, the article having been moulded in accordance with the method of any one of claims 1 to 20.

22. A mould tool for carrying out the method of any one of claims 1 to 20, the mould tool having a cavity part and a core part and the mould tool defining in its closed state, between its cavity part (11) and its core part (12), narrow or first gap portion(s) (1',2',3') whose mould part gap is to be substantially reproduced in the thin wall portion(s) of the article and wide or second gap portion(s) (4',5' ,6';5",6") whose mould part gap is less than the thickness of the thick wall portion(s) of the finish formed article, the mould tool being so constructed that plastics material mixture injected into the narrow gap portions can solidify before such material in the wide gap portions, which can expand by foaming on withdrawal of at least a portion of one part of the mould tool from the other part, wherein
one part of the mould tool has one or more portions (111,111') movably mounted on the said one part of the mould tool for widening locally the mould part gap for forming the thick wall portion(s) of the article.

23. A mould tool for carrying out the method of any one of claims 1 to 20, the mould tool having a cavity part and a core part and the mould tool defining in its closed state, between its cavity part (11) and its core part (12), narrow or first gap portion(s) (1',2',3') whose mould part gap is to be substantially reproduced in the thin wall portion(s) of the article and wide or second gap portion(s) (4',5',6';5",6") whose mould part gap is less than the thickness of the thick wall portion(s) of the finish formed article, the mould tool being so constructed that plastics material mixture injected into the narrow gap portions can solidify before such material in the wide gap portions, which can expand by foaming on withdrawal of at least a portion of one part of the mould tool from the other part, wherein
the one part of the mould tool is adapted to be partially withdrawn prior to opening of the mould tool for widening locally the mould part gap for forming the thick wall portion(s) of the article.

24. A mould tool as claimed in claim 22 or claim 23, wherein the core includes an air injection port (16) for injecting air between it and the article, whereby the article is left in the cavity part of the mould tool for inwards foaming expansion of the thick wall portions.

25. A mould tool as claimed in claim 22 or claim 23, wherein the core includes means (125) for mechanically removing the core from the article, whereby the article is left in the cavity part of the mould tool for inwards foaming expansion of the thick wall portions.

26. A mould tool as claimed in claim 22 or claim 23, wherein the cavity includes an air injection port (15) for injecting air between it and the article, whereby the article is left on the core part of the mould tool for outwards foaming expansion of the thick wall portions.

27. A mould tool as claimed in claim 22 or claim 23, the cavity includes means (115) for mechanically removing the cavity from the article, whereby the article is left on the core part of the mould tool for outwards foaming expansion of the thick wall portions.

28. A mould tool as claimed in any one of claims 22 to 27, including means (114) for cooling the narrow gap portion(s) of the mould tool to a greater extent than the wide gap portion(s) thereof.

29. A mould tool as claimed in any one of claims 22 to 28, including means (113) for heating the wide gap portion(s) thereof.

30. A mould tool as claimed in any one of claims 22 to 29, including insulating insert(s) (112) at the portion(s) thereof corresponding to the thick wall portions of the article.

31. A mould tool as claimed in any one of claims 22 to 30, wherein the mould part gap varies between the wide and narrow gap portions of the mould.

32. A mould tool as claimed in any one of claims 22 to 31, wherein the mould part gap is constant between the first and second gap portions of the mould corresponding to the thin and thick wall portions of the article.

## Patentansprüche

1. Ein Verfahren zur Formung eines Artikels über Einspritzung von Plastikmaterial in eine Form, wobei der fertig geformte Artikel (einen) dünne(n) Wandabschnitt(e) (101, 102, 103) und (einen) dicke(n), zumindest teilweise aufgeschäumte(n) Wandabschnitt(e) (104, 105, 106) aufweist, wobei das Verfahren die Schritte umfaßt:
• Bereitstellen eines Formwerkzeuges, das in seinem geschlossenen Zustand zwischen seinem Formhöhlenteil (11) und seinem Kernteil (einen) enge(n) Abschnitt(e) (1', 2', 3') begrenzt, dessen/deren Formteil-Lücke(n) in dem/den dünnen Wandabschnitt(en) (4', 5', 6') im wesentlichen wiederzugeben ist; und (einen) weite(n) Lückenabschnitt(e), dessen/deren Formteil-Lücke(n) geringer ist als die Stärke des/der weiten Lückenabschnitte(s) des fertig geformten Artikels;
• Schließen des Formenwerkzeuges, um die engen und weiten Lückenabschnitte abzugrenzen;
• Einspritzen einer ein Grundpolymer und ein Schaum erzeugendes Additiv enthaltenden Plastikmaterial-Mischung in das Formwerkzeug hinein;
• Zulassen daß die Plastikmaterial-Mischung in den engen Lückenabschnitten des Formwerkzeuges zumindest teilweise erstarrt, um die dünnen Wandabschnitte des fertig geformten Artikels zu erzeugen;
• Zurückziehen mindestens eines Teiles des Formwerkzeuges von dem anderen Teil, bevor die Plastikmaterial-Mischung in dem/den weiten Lückenabschnitt(en) des Formwerkzeuges zumindest im Wesentlichen erstarrt ist, um es der Mischung zu erlauben durch Aufschäumen zu expandieren und zumindest etwas des/der dicken Wandabschnitte(s) des fertig geformten Artikels zu bilden; und
• Auswerfen des Artikels aus dem Formwerkzeug.

2. Ein Verfahren zur Formung eines Artikels gemäß Anspruch 1, in dem der Artikel (einen) dicke(n) Wandabschnitt(e) aufweist, an welchem/welchen die aufschäumende Expansion auf den Rückziehschritt hin bis zum Auswurfschritt beschränkt ist, und in dem ihr Auftreten nach dem Auswurf des Artikels aus der Form zugelassen wird.

3. Ein Verfahren zur Formung eines Artikels gemäß Anspruch 1 oder 2, in dem der Rückziehschritt aus dem Zurückziehen eines oder mehrerer Abschnitte (111, 111') des einen Teils des Formwerkzeuges aus seiner geschlossenen Stellung besteht, um die Formteil-Lücke lokal für eine aufschäumende Expansion der Plastikmaterial-Mischung zu erweitern, um den/die dicken Wandabschnitt(e) des Artikels in der lokal erweiterten Lücke zu bilden; und aus dem Öffnen des Formwerkzeuges nachdem der/die dicke(n) Wandabschnitt(e) des Artikels im Wesentlichen in Form erstarrt ist/sind.

4. Ein Verfahren zur Formung eines Artikels gemäß Anspruch 3, in dem die aufschäumende Expansion gegen und zwischen dem/den zurückgezogenen Abschnitt(en) des einen Formenteiles des Formwerkzeuges und des anderen Formenteiles stattfindet, um die lokal erweiterte Formenteil-Lücke vollständig auszufüllen.

5. Ein Verfahren zur Formung eines Artikels gemäß Anspruch 3, in dem die aufschäumende Expansion in einem Ausmaß auftritt um die lokal erweiterte Formteil-Lücke nicht vollständig auszufüllen.

6. Ein Verfahren zur Formung eines Artikels gemäß Anspruch 1 oder Anspruch 2, in dem der Rückziehschritt aus dem gänzlichen oder teilweisen Zurückziehen des einen Teiles des Formwerkzeuges besteht, um die Formteil-Lücke zur aufschäumenden Expansion der Plastikmaterial-Mischung lokal zu erweitern, um den/die dicken Wandabschnitt(e) des Artikels gegen oder zwischen den Formenteilen in der lokal erweiterten Lücke zu bilden; und aus dem vollständigen Öffnen des Formwerkzeuges, nachdem der/die dicke(n) Wandabschnitt(e) des Artikels im Wesentlichen in Form erstarrt ist/sind.

7. Ein Verfahren zur Formung eines Artikels gemäß Anspruch 6, in dem die aufschäumende Expansion gegen und zwischen den Formenteilen stattfindet, um die lokal erweiterte Formenteil-Lücke vollständig auszufüllen.

8. Ein Verfahren zur Formung eines Artikels gemäß Anspruch 6, in dem die aufschäumende Expansion in einem Ausmaß auftritt um die lokal erweiterte Formteil-Lücke nicht vollständig auszufüllen.

9. Ein Verfahren zur Formung eines Artikels gemäß einem der vorstehenden Ansprüche, in dem der Rückziehschritt aus dem Öffnen des Formwerkzeuges besteht, bevor der/die dicke(n) Wandabschnitt(e) des Artikels in Form erstarrt ist/sind; wobei die aufschäumende Expansion hiervon dann in der umgebenden Atmosphäre auftritt, um den/die dicken Wandabschnitt(e) hiervon zu bilden.

10. Ein Verfahren zur Formung eines Artikels gemäß Abbildung 9, in dem der Rückziehschritt das Zurückziehen des Kerns von dem Artikel einschließt, wodurch der Artikel in der Formhöhle des Formwerkzeuges zurückgelassen wird, und die aufschäumende Expansion bewirkt daß der/die dicke(n) Wandabschnitt(e) die Stärke nach Innen erhöht/erhöhen, wobei die auswärtige Form des Artikels lokal durch den Formhöhlenteil der Form kontrolliert wird.

11. Ein Verfahren zur Formung eines Artikels gemäß Anspruch 10, in dem der Rückziehschritt das Einspritzen von Luft zwischen dem Kernteil des Formwerkzeuges und dem Artikel einschließt.

12. Ein Verfahren zur Formung eines Artikels gemäß Anspruch 10, in dem der Rückziehschritt das mechanische Zurückziehen des Kernteiles des Formwerkzeuges von dem Artikel einschließt.

13. Ein Verfahren zur Formung eines Artikels gemäß Anspruch 9, in dem der Rückziehschritt das Einspritzen von Luft zwischen den Formhöhlenteil des Formwerkzeuges und den Artikel einschließt, wodurch der Artikel auf dem Kernteil des Formwerkzeuges verbleibt und die aufschäumende Expansion bewirkt daß der/die dicke(n) Wandabschnitt(e) die Stärke nach Außen erhöht/erhöhen, wobei die inwärtige Form des Artikels lokal durch den Kernteil der Form kontrolliert wird.

14. Ein Verfahren zur Formung eines Artikels gemäß Anspruch 13, in dem der Rückziehschritt das Einspritzen von Luft zwischen den Formhöhlenteil des Formwerkzeuges und dem Artikel einschließt.

15. Ein Verfahren zur Formung eines Artikels gemäß Anspruch 13, in dem der Rückziehschritt das mechanische Zurückziehen des Kernteiles des Formwerkzeuges von dem Artikel einschließt.

16. Ein Verfahren zur Formung eines Artikels gemäß Anspruch 9, in dem die Rückzieh- und Auswerfschritte zur selben Zeit erfolgen.

17. Ein Verfahren zur Formung eines Artikels gemäß einem der vorstehenden Ansprüche, in dem der Schritt des Erstarrenlassens der Plastikmaterial-Mischung in dem/den engen Lückenabschnitt(en) des Formwerkzeuges den Schritt der Abkühlung dieser Abschnitte des Formwerkzeuges in größerem Ausmaß als den/die weiten Lückenabschnitt(e) hiervon einschließt.

18. Ein Verfahren zur Formung eines Artikels gemäß einem der Ansprüche 1 bis 16, in dem der Schritt des Erstarrenlassens der Plastikmaterial-Mischung in dem/den engen Lückenabschnitt(en) des Formwerkzeuges den Schritt der Kühlung dieser Abschnitte des Formwerkzeuges und der Heizung des/der weiten Lückenabschnitte(s) hiervon einschließt.

19. Ein Verfahren zur Formung eines Artikels gemäß einem der vorstehenden Ansprüche, in dem der Rückziehschritt des einen Teiles des Formwerkzeuges - oder seines zurückziehbaren Abschnittes - verzögert ist, bis die Oberfläche der Plastikmaterial-Mischung in dem/den weiten Lückenabschnitt(en) im Wesentlichen erstarrt ist.

20. Ein Verfahren zur Formung eines Artikels über Einspritzung von Plastikmaterial in eine Form, wobei der fertig geformte Artikel (einen) dünne(n) Wandabschnitt(e) und (einen) dicke(n), zumindest teilweise aufgeschäumte(n) Wandabschnitt(e) aufweist, wobei das Verfahren die Schritte umfaßt:
• Bereitstellen eines Formwerkzeuges, das in seinem geschlossenen Zustand zwischen seinem Formhöhlenteil und seinem Kernteil (einen) erste(n) Lückenabschnitt(e) begrenzt, dessen Formteil-Lücke in dem/den dünnen Wandabschnitt(en) im wesentlichen wiederzugeben ist; und (einen) zweite(n) Lückenabschnitt(e) (5", 6''), dessen Formteil-Lücke geringer ist als die Stärke des/der weiten Lückenabschnitte(s) des fertig geformten Artikels; wobei die Formteil-Lücke der ersten und zweiten Lückenabschnitte zueinander konstant sind;
• Schließen des Formenwerkzeuges, um die ersten und zweiten Lückenabschnitte abzugrenzen;
• Einspritzen einer ein Grundpolymer und ein Schaum erzeugendes Additiv enthaltenden Plastikmaterial-Mischung in das Formwerkzeug hinein;
• unterschiedliches Abkühlen der ersten und zweiten Lückenabschnitte, wobei der/die erste(n) Lückenabschnitt(e) in größerem Ausmaß gekühlt werden als der/die zweite(n) Lückenabschnitt(e);
• Zulassen daß die Plastikmaterial-Mischung in den ersten Lückenabschnitten des Formwerkzeuges zumindest teilweise erstarrt, um die dünnen Wandabschnitte des fertig geformten Artikels zu erzeugen;
• Zurückziehen mindestens eines Teiles des Formwerkzeuges von dem anderen Teil, bevor die Plastikmaterial-Mischung in dem/den zweiten Lückenabschnitt(en) des Formwerkzeuges zumindest im Wesentlichen erstarrt ist, um es der Mischung zu erlauben durch Aufschäumen zu expandieren und zumindest etwas des/der dicken Wandabschnitte(s) des fertig geformten Artikels zu bilden; und
• Auswerfen des Artikels aus dem Formwerkzeug.

21. Ein aus Plastikmaterial geformter Artikel, wobei der fertig geformte Artikel (einen) dünne(n) Wandabschnitt(e) und (einen) dicke(n) Wandabschnitt(e) besitzt, der/die dicke(n) Wandabschnitt(e) zumindest zum Teil durch Aufschäumen expandiert ist/sind, und der Artikel gemäß der Verfahren eines der Ansprüche 1 bis 20 geformt wurde.

22. Ein Formwerkzeug zur Ausführung des Verfahrens gemäß einem der Ansprüche 1 bis 20, wobei das Formwerkzeug ein Formhöhlenteil und einen Kernteil besitzt und das Formwerkzeug in seinem geschlossenen Zustand zwischen seinem Formhöhlenteil (11) und seinem Kernteil (12) (einen) enge(n) oder erste(n) Lückenabschnitt(e) (1', 2', 3') aufweist, dessen/deren Formenteil-Lücke in dem/den dünnen Wandabschnitt(en) im wesentlichen wiedergegeben wird; und (eine) weite(n) oder zweite(n) Lückenabschnitt(e) (4', 5', 6', 5", 6''), dessen/deren Formteil-Lücke geringer ist als die Stärke des/der dicken Wandabschnitte(s) des fertig geformten Artikels; wobei die Form so konstruiert ist, daß in die engen Lückenabschnitte eingespritzte Plastikmaterial-Mischung vor einem derartigen Material in den weiten Lückenabschnitten erstarren kann, welches - auf das Zurückziehen mindestens eines Abschnittes von einem Teil des Formenwerkzeuges von jenem anderen Teil - durch Aufschäumen expandieren kann; worin
ein Teil des Formwerkzeuges einen oder mehrere beweglich auf diesem einen Teil der Form montierte Abschnitte (111, 111') besitzt, um die Formteil-Lücke zur Bildung des/der dicken Wandabschnitte(s) des Artikels lokal zu erweitern.

23. Ein Formwerkzeug zur Ausführung des Verfahrens gemäß einem der Ansprüche 1 bis 20, wobei das Formwerkzeug ein Formhöhlenteil und einen Kernteil besitzt und das Formwerkzeug in seinem geschlossenen Zustand zwischen seinem Formhöhlenteil (11) und seinem Kernteil (12) (einen) enge(n) oder erste(n) Lückenabschnitt(e) (1', 2', 3') aufweist, dessen/deren Formenteil-Lücke in dem/den dünnen Wandabschnitt(en) im wesentlichen wiedergegeben wird; und (eine) weite(n) oder zweite(n) Lückenabschnitt(e) (4', 5', 6', 5", 6"), dessen/deren Formteil-Lücke geringer ist als die Stärke des/der dicken Wandabschnitte(s) des fertig geformten Artikels; wobei die Form so konstruiert ist, daß in die engen Lückenabschnitte eingespritzte Plastikmaterial-Mischung vor einem derartigen Material in den weiten Lückenabschnitten erstarren kann, welches - auf das Zurückziehen mindestens eines Abschnittes von einem Teil des Formenwerkzeuges von jenem anderen Teil - durch Aufschäumen expandieren kann; worin
der eine Teil des Formwerkzeuges angepaßt ist, um vor dem Öffnen des Formwerkzeuges teilweise zurückgezogen zu werden, um die Formteil-Lücke zur Bildung des/der dicken Wandabschnitte(s) des Artikels lokal zu erweitern.

24. Ein Formwerkzeug gemäß Anspruch 22 oder Anspruch 23, in dem der Kern eine Luft-Einspritzöffnung (16) zur Einspritzung von Luft zwischen ihn und den Artikel einschließt, wodurch der Artikel für eine einwärts gerichtete, aufschäumende Expansion der dicken Wandabschnitte in dem Formhöhlenteil des Formwerkzeuges verbleibt.

25. Ein Formwerkzeug gemäß Anspruch 22 oder Anspruch 23, in dem der Kern eine Vorrichtung (125) zur mechanischen Entfernung des Kerns von dem Artikel einschließt, wodurch der Artikel für eine einwärts gerichtete, aufschäumende Expansion der dicken Wandabschnitte in dem Formhöhlenteil des Formwerkzeuges verbleibt.

26. Ein Formwerkzeug gemäß Anspruch 22 oder Anspruch 23, in dem die Formhöhle eine Luft-Einspritzöffnung (15) zur Einspritzung von Luft zwischen sich und den Artikel einschließt, wodurch der Artikel für eine auswärts gerichtete, aufschäumende Expansion der dicken Wandabschnitte auf dem Kernteil des Formwerkzeuges verbleibt.

27. Ein Formwerkzeug gemäß Anspruch 22 oder Anspruch 23, in dem die Formhöhle eine Vorrichtung (115) zur mechanischen Entfernung der Formhöhle von dem Artikel einschließt, wodurch der Artikel für eine auswärts gerichtete, aufschäumende Expansion der dicken Wandabschnitte auf dem Kernteil des Formwerkzeuges verbleibt.

28. Ein Formwerkzeug gemäß einem der Ansprüche 22 bis 27, das Vorrichtungen (114) zur Kühlung des/der engen Lückenabschnitte(s) des Formwerkzeuges im größeren Ausmaß als des/der weiten Lückenabschnitte(s) hiervon einschließt.

29. Ein Formwerkzeug gemäß einem der Ansprüche 22 bis 28, das Vorrichtungen (113) zur Heizung des/der weiten Lückenabschnitte(s) hiervon einschließt.

30. Ein Formwerkzeug gemäß einem der Ansprüche 22 bis 29, das (einen) isolierende(n) Einsatz/Einsätze (112) an jenem/jenen Abschnitt(en) hiervon einschließt, der/die den dicken Wandabschnitten des Artikels entsprechen.

31. Ein Formwerkzeug gemäß einem der Ansprüche 22 bis 30, in dem die Formteil-Lücke zwischen den weiten und engen Lückenabschnitten der Form variiert.

32. Ein Formwerkzeug gemäß einem der Ansprüche 22 bis 31, in dem die Formteil-Lücke zwischen den ersten und zweiten Lückenabschnitten der Form, die den dicken und den dünnen Wandabschnitten des Artikels entsprechen, konstant ist.

## Revendications

1. Procédé consistant à former un article par l'intermédiaire d'une injection de matière plastique dans un moule, l'article formé à l'état fini comportant une ou des parties de paroi minces (101, 102, 103) et une ou des parties de paroi épaisses (104, 105, 106), la ou les parties de paroi épaisses étant au moins partiellement moussées, le procédé étant constitué des étapes consistant à :
• fournir un outil de moule définissant dans son état fermé, entre son élément de cavité (11) et son élément de noyau, une ou des parties d'espacement étroites (1', 2', 3') dont l'espacement d'élément de moule doit être sensiblement reproduit dans la ou les parties de paroi minces (4', 5', 6') de l'article et une ou des parties d'espacement larges dont l'espacement d'élément de moule est inférieur à l'épaisseur de la ou des parties de paroi minces de l'article formé à l'état fini,
• fermer l'outil de moule afin de définir les parties d'espacement étroites et larges,
• injecter un mélange de matière plastique comprenant un polymère de base et un additif produisant de la mousse dans l'outil de moule,
• permettre que le mélange de matière plastique se solidifie au moins substantiellement dans les parties d'espacement étroites de l'outil de moule afin de produire les parties de paroi minces de l'article formé à l'état fini,
• retirer au moins une partie d'un premier élément de l'outil de moule de l'autre élément avant que le mélange de matière plastique se soit solidifié au moins substantiellement dans la ou les parties d'espacement larges de l'outil de moule afin de permettre que le mélange se dilate par moussage et forme au moins une certaine quantité de la ou des parties de paroi épaisses de l'article formé à l'état fini, et
• éjecter l'article de l'outil de moule.

2. Procédé consistant à former un article selon la revendication 1, dans lequel l'article comporte une ou des parties de paroi épaisses au niveau desquelles l'expansion par moussage est forcée lors de l'étape de retrait jusqu'à l'étape d'éjection et est autorisée à se produire après l'éjection de l'article à partir du moule.

3. Procédé consistant à former un article selon la revendication 1 ou la revendication 2, dans lequel l'étape de retrait est constituée du retrait d'une ou plusieurs parties (111, 111') du premier élément de l'outil de moule à partir de sa position fermée afin d'élargir localement l'espacement d'élément de moule en vue d'une expansion par moussage du mélange de matière plastique afin de former la ou les parties de paroi épaisses de l'article dans l'espacement localement élargi, et de l'ouverture de l'outil de moule après que la ou les parties de paroi épaisses de l'article se soient substantiellement solidifiées vers une forme.

4. Procédé consistant à former un article selon la revendication 3, dans lequel l'expansion par moussage a lieu contre et entre la ou les parties retirées du premier élément de moule et de l'autre élément de moule afin de remplir complètement la partie d'espacement d'élément de moule localement élargi.

5. Procédé consistant à former un article selon la revendication 3, dans lequel l'expansion par moussage se produit jusqu'au point de ne pas remplir totalement l'espacement d'élément de moule localement élargi.

6. Procédé consistant à former un article selon la revendication 1 ou la revendication 2, dans lequel l'étape de retrait est constituée d'un retrait massif et partiel du premier élément de l'outil de moule afin d'élargir localement l'espacement d'élément de moule en vue d'une expansion par moussage du mélange de matière plastique afin de former la ou les parties de paroi épaisses de l'article contre et entre les éléments de moule dans l'espacement localement élargi, et de l'ouverture totale de l'outil de moule après que la ou les parties de paroi épaisses de l'article se sont substantiellement solidifiées vers une forme.

7. Procédé consistant à former un article selon la revendication 6, dans lequel l'expansion par moussage se produit contre et entre les éléments de moule afin de remplir totalement l'espacement d'élément de moule localement élargi.

8. Procédé consistant à former un article selon la revendication 6, dans lequel l'expansion par moussage se produit jusqu'au point de ne pas remplir totalement l'espacement d'élément de moule localement élargi.

9. Procédé consistant à former un article selon l'une quelconque des revendications précédentes, dans lequel l'étape de retrait est constituée de l'ouverture de l'outil de moule avant que la ou les parties de paroi épaisses de l'article se soient solidifiées vers une forme, l'expansion par moussage de celui-ci se produisant ensuite dans l'atmosphère ambiante afin de former la ou les parties de paroi épaisses.

10. Procédé consistant à former un article selon la revendication 9, dans lequel l'étape de retrait comprend le retrait du noyau à partir de l'article, d'où il résulte que l'article est laissé dans l'élément de cavité de l'outil de moule et que l'expansion par moussage amène la ou les parties de paroi épaisses à augmenter d'épaisseur vers l'intérieur, la forme extérieure de l'article étant maîtrisée localement par l'élément de cavité du moule.

11. Procédé consistant à former un article selon la revendication 10, dans lequel l'étape de retrait comprend l'injection d'air entre l'élément de noyau de l'outil de moule et l'article.

12. Procédé consistant à former un article selon la revendication 10, dans lequel l'étape de retrait comprend un retrait mécanique de l'élément de noyau de l'outil de moule à partir de l'article.

13. Procédé consistant à former un article selon la revendication 9, dans lequel l'étape de retrait comprend l'injection d'air entre l'élément de cavité de l'outil de moule et l'article, d'où il résulte que l'article est laissé sur l'élément de noyau de l'outil de moule et que l'expansion par moussage amène la ou les parties de paroi épaisses à augmenter d'épaisseur vers l'extérieur, la forme intérieure de l'article étant maîtrisée localement par l'élément de noyau du moule.

14. Procédé consistant à former un article selon la revendication 13, dans lequel l'étape de retrait comprend l'injection d'air entre l'élément de cavité de l'outil de moule et l'article.

15. Procédé consistant à former un article selon la revendication 13, dans lequel l'étape de retrait comprend un retrait mécanique de l'élément de noyau de l'outil de moule à partir de l'article.

16. Procédé consistant à former un article selon la revendication 9, dans lequel les étapes de retrait et d'éjection se produisent en même temps.

17. Procédé consistant à former un article selon l'une quelconque des revendications précédentes, dans lequel l'étape consistant à permettre que le mélange de matière plastique se solidifie dans la ou les parties d'espacement étroites de l'outil de moule comprend l'étape consistant à refroidir ces parties de l'outil de moule dans une plus grande mesure que la ou les parties d'espacement larges de celui-ci.

18. Procédé consistant à former un article selon l'une quelconque des revendications 1 à 16, dans lequel l'étape consistant à permettre que le mélange de matière plastique se solidifie dans la ou les parties d'espacement étroites de l'outil de moule comprend l'étape consistant à refroidir ces parties de l'outil de moule et à chauffer la ou les parties d'espacement larges de celui-ci.

19. Procédé consistant à former un article selon l'une quelconque des revendications précédentes, dans lequel l'étape consistant à retirer le premier élément de l'outil de moule, ou sa partie pouvant être retirée, est retardée jusqu'à ce que la surface du mélange de matière plastique se soit substantiellement solidifiée dans la ou les parties d'espacement larges.

20. Procédé consistant à former un article par l'intermédiaire d'injection de matière plastique dans un moule, l'article formé à l'état fini comportant une ou des parties de paroi minces et une ou des parties de paroi épaisses, la ou les parties de paroi épaisses étant au moins partiellement moussées, le procédé étant constitué des étapes consistant à :
• réaliser un outil de moule définissant dans son état fermé, entre son élément de cavité et son élément de noyau, une ou des premières parties d'espacement dont l'espacement d'élément de moule doit être sensiblement reproduit dans la ou les parties de paroi minces de l'article et une ou des secondes parties d'espacement (5", 6") dont l'espacement d'élément de moule est inférieur à l'épaisseur de la ou des parties de paroi épaisses de l'article formé à l'état fini, l'espacement d'élément de moule des premières et secondes parties d'espacement étant constant de l'une à l'autre,
• fermer l'outil de moule pour définir les premières et secondes parties d'espacement,
• injecter un mélange de matière plastique comprenant un polymère de base et un additif produisant de la mousse dans l'outil de moule,
• refroidir de façon différentielle les premières et secondes parties d'espacement, la ou les premières parties d'espacement étant refroidies dans une mesure plus grande que la ou les secondes parties d'espacement,
• permettre que le mélange de matière plastique se solidifie au moins substantiellement dans les premières parties d'espacement de l'outil de moule afin de produire les parties de paroi minces de l'article formé à l'état fini,
• retirer au moins une partie d'un premier élément de l'outil de moule de l'autre élément avant que le mélange de matière plastique se soit au moins substantiellement solidifié dans la ou les secondes parties d'espacement de l'outil de moule afin de permettre que le mélange se dilate par moussage et forme au moins une certaine quantité de la ou des parties de paroi épaisses de l'article formé à l'état fini, et
• éjecter l'article de l'outil de moule.

21. Article formé à partir de matière plastique, l'article formé à état fini comportant une ou des parties de paroi minces et une ou des parties de paroi épaisses, la ou les parties de paroi épaisses étant au moins partiellement dilatées par moussage, l'article ayant été moulé conformément au procédé de l'une quelconque des revendications 1 à 20.

22. Outil de moule destiné à exécuter le procédé de l'une quelconque des revendications 1 à 20, l'outil de moule comportant un élément de cavité et un élément de noyau et l'outil de moule définissant dans son état fermé, entre son élément de cavité (11) et son élément de noyau (12), une ou des parties d'espacement étroites ou première(s) partie(s) d'espacement (1', 2', 3') dont l'espacement d'élément de moule doit être sensiblement reproduit dans la ou les parties de paroi minces de l'article et une ou des parties d'espacement larges ou seconde(s) partie(s) d'espacement (4', 5', 6' ; 5'', 6'') dont l'espacement d'élément de moule est inférieur à l'épaisseur de la ou des parties de paroi épaisses de l'article formé à l'état fini, l'outil de moule étant conçu de sorte que le mélange de matière plastique injecté dans les parties d'espacement étroites puisse se solidifier avant une telle matière dans les parties d'espacement larges, lequel peut se dilater par moussage lors du retrait d'au moins une partie d'un premier élément de l'outil de moule à partir de l'autre élément, dans lequel
un élément de l'outil de moule comporte une ou plusieurs parties (111, 111') montées de façon mobile sur ledit premier élément de l'outil de moule en vue d'élargir localement l'espacement d'élément de moule en vue de former la ou les parties de paroi épaisses de l'article.

23. Outil de moule destiné à exécuter le procédé selon l'une quelconque des revendications 1 à 20, l'outil de moule comportant un élément de cavité et un élément de noyau et l'outil de moule définissant dans son état fermé, entre son élément de cavité (11) et son élément de noyau (12), une ou des parties d'espacement étroites ou première(s) partie(s) d'espacement (1', 2', 3') dont l'espacement d'élément de moule doit être sensiblement reproduit dans la ou les parties de paroi minces de l'article et une ou des parties d'espacement larges ou seconde(s) partie(s) d'espacement (4', 5', 6' ; 5'', 6'') dont l'espacement d'élément de moule est inférieur à l'épaisseur de la ou des parties de paroi épaisses de l'article formé à l'état fini, l'outil de moule étant conçu de sorte qu'un mélange de matière plastique injecté dans les parties d'espacement étroites puisse se solidifier avant une telle matière dans les parties d'espacement larges, lequel peut se dilater par moussage lors du retrait d'au moins une partie d'un élément de l'outil de moule à partir de l'autre élément, dans lequel
le premier élément de l'outil de moule est conçu pour être partiellement retiré avant l'ouverture de l'outil de moule en vue d'élargir localement l'espacement d'élément de moule en vue de former la ou les parties de paroi épaisses de l'article.

24. Outil de moule selon la revendication 22 ou la revendication 23, dans lequel le noyau comprend un orifice d'injection d'air (16) destiné à injecter de l'air entre celui-ci et l'article, d'où il résulte que l'article est laissé dans l'élément de cavité de l'outil de moule en vue d'une expansion par moussage vers l'intérieur des parties de paroi épaisses.

25. Outil de moule selon la revendication 22 ou la revendication 23, dans lequel le noyau comprend un moyen (125) destiné à enlever de façon mécanique le noyau de l'article, d'où il résulte que l'article est laissé dans l'élément de cavité de l'outil de moule en vue d'une expansion par moussage vers l'intérieur des parties de paroi épaisses.

26. Outil de moule selon la revendication 22 ou la revendication 23, dans lequel la cavité comprend un orifice d'injection d'air (15) destiné à injecter de l'air entre celui-ci et l'article, d'où il résulte que l'article est laissé sur l'élément de noyau de l'outil de moule en vue d'une expansion par moussage vers l'extérieur des parties de paroi épaisses.

27. Outil de moule selon la revendication 22 ou la revendication 23, la cavité comprend un moyen (115) destiné à enlever mécaniquement la cavité de l'article, d'où il résulte que l'article est laissé sur l'élément de noyau de l'outil de moule en vue d'une expansion par moussage vers l'extérieur des parties de paroi épaisses.

28. Outil de moule selon l'une quelconque des revendications 22 à 27, comprenant un moyen (114) destiné à refroidir la ou les parties d'espacement étroites de l'outil de moule dans une étendue plus grande que la ou les parties d'espacement larges de celui-ci.

29. Outil de moule selon l'une quelconque des revendications 22 à 28, comprenant un moyen (113) destiné à chauffer la ou les parties d'espacement larges de celui-ci.

30. Outil de moule selon l'une quelconque des revendications 22 à 29, comprenant une ou des pièces rapportées isolantes (112) au niveau de la partie ou des parties de celui-ci correspondant aux parties de paroi épaisses de l'article.

31. Outil de moule selon l'une quelconque des revendications 22 à 30, dans lequel l'espacement d'élément de moule varie entre les parties d'espacement larges et étroites du moule.

32. Outil de moule selon l'une quelconque des revendications 22 à 31, dans lequel l'espacement d'élément de moule est constant entre les premières et secondes parties d'espacement du moule correspondant aux parties de paroi minces et épaisses de l'article.
